# EUROPEAN PATENT APPLICATION

(11) **EP 2 760 169 A1**
(43) Date of publication of application: **30.07.2014**
(21) Application number: 13172534.3
(22) Date of filing: 18.06.2013
(51) Int. Cl.: H04L 12/715

(54) **Method and apparatus for provisioning a transport service in a multi-domain multi-layer network**

(30) Priority: 23.01.2013 US 201313748079
(71) Applicant: ADVA AG Optical Networking, 98617 Meiningen (DE)
(72) Inventor: Bryskin, Igor, Great Falls, VA Virginia 22066 (US)
(74) Representative: Isarpatent

(57) **Abstract**

A method for provisioning a transport service in a multidomain multi-layer network comprising at least one client layer network domains and at least one server layer network domain, said method comprising the steps of providing a virtual topology of each od said server layer network domain depending on connectivity requirements set by each of the served client layer network domains for a connectivity across said server layer network domains as at least one segment of said client layer network domain topology; determining an end-to-end path between two client nodes across one or more said server layer network domains based on an overlay topology comprising the virtual topologies provided by each of said server layer network domains, access links connecting client network nodes of said client layer network domains to said server layer network domains and inter-domain links interconnecting said server layer network domains in the client layer; and provisioning a transport service via the determined end-to-end path.

## Description

A contemporary network can have a multi-domain multi-layer architecture comprising several layers. One or more layers at the top of a layer stack (called client layers) peer clients of the network and are directly responsible for providing various services to the clients. Other layers at the bottom of the stack (called server layers) provide transport services to the client layers.

For example, a network can have a two-domain two-layer architecture with a single client layer and a single server layer. The server layer defines to a large degree a topology of the client layer, i.e. the way its switches are interconnected and the properties of links interconnecting them. These link properties include information on available bandwidth, network failure recovery capabilities, data transfer delay characteristics, etc. By manipulating transport services provided by the server layer of the multi-domain multi-layer network, it is possible for a network operator to modify the client layer topology. When modifying the client layer topology, one can, for example, add or remove links or change link parameters. The transport services provided by the server layer to the client layer of the multi-domain multi-layer network can be requested, modified and released by the client layer.

However, in a conventional multi-layer network, the client layer currently has no way of selecting paths of a requested transport service across a server layer network domain. Such path selection is left up entirely to a server layer network domain internal traffic engineering. One reason for that is that the client layer may have no access to the information on the server layer network domain internal topology. This is especially true in case the transport services are outsourced to a third party provider who is usually reluctant to reveal the real network topology to its clients. Even if the information of the server layer network domain internal topology is available, this information is not expected to be properly interpreted or understood and processed by the client layer traffic engineering tools. For example, a conventional IP/MPLS layer traffic engineering application normally is not able to compute paths over asymmetrical WDM switches or to deal with optical impairments implications.

The inability of the client layer in a conventional multi-domain multi-layer network to perform a path selection for the transport services provided by a server layer network domain is a serious limitation. For example, some transport services need to be placed as diverse from each other as possible, because they are intended to participate in the same network failure recovery scheme. Other transport services are desirable to be implemented in such a way that they share fate as much as possible, because they are meant to be part of the same link aggregation group. Furthermore, some transport services need to be optimized according to lowest cost criteria, while other transport services need to be optimized according to some other criteria such as best quality of service , minimal transfer delay, best resource utilization, best quality of optical signal, etc.

In a conventional multi-domain multi-layer network the only way for the client layer to influence in any way the path selection for the requested from the server layer network domain transport services is to provide by the client layer network domain operator explicit path specifications at the time when the transport services are requested or modified. However, this method implies an intimate knowledge and full understanding of the server layer network domain technology and topology, including the addresses of every link and switch (node), the way the switches are interconnected, the information on every switch blocking restrictions and internal connectivity constraints. Moreover, this also implies that the client layer network domain operator has an accurate and detailed information about resources available for additional transport services and those that have been already allocated for existing services provided by the server layer network domain. In addition, the client layer network domain operator must have for the case of a WDM layer network domain a detailed knowledge of all transponders, amplifiers, ROADMs, fiber types, optical power levels, etc. Furthermore, the client layer network domain operator must have proper tools to process this information, so that the specified paths feasibility can be validated from the optical impairments point of view. All these assumptions and conditions (mentioned above) are very demanding; hence the conventional way of influencing a path selection for a requested transport service by a client layer network domain operator is very cumbersome and requires a significant configuration effort as well as a high qualification level from the client layer network domain operator. Consequently, this conventional way is expensive and prone to configuration errors.

Accordingly, there is a need to provide a method and an apparatus which overcomes the above-mentioned limitations and which allows for a client in a multi-domain multi-layer network to determine paths across server layer network domains using existing control or/and management plane automation tools, which are the same tools that are currently used for traffic engineering purposes in its own (client) layer.

The invention proposes a method for provisioning a transport service in a multi-domain multi-layer network.

According to a possible embodiment of the method for provisioning a transport service in a multi-domain multi-layer network comprising at least one client layer network domains and at least one server layer network domain, the method comprises the steps of:
providing a virtual topology of each said server layer network domains depending on connectivity requirements set for a connectivity across each of said server layer network domains by each served client layer network domain as at least one segment of said client layer network domain topology;
determining an end-to-end path between two client network nodes across one or more server layer network domains based on an overlay topology comprising the virtual topologies provided by each of said server layer network domains, access links connecting network nodes of the client network layer domains to said server layer network domains and inter-domain links interconnecting the server layer network domains in the client layer; and
provisioning the transport service via the determined path.

In a possible embodiment of the method according to the first aspect of the present invention the server layer network domains provide transport services to said client layer network domains.

In a further possible embodiment of the method according to the first aspect of the present invention the end-to-end path is computed by a traffic engineering tool of said client network layer domain based on the overlay network topology.

In a further possible embodiment of the method according to the first aspect of the present invention the virtual topology of a given server layer network domain comprises virtual nodes interconnected via virtual links each of which associated with a computed feasible path across said server layer network domain.

In a further possible embodiment of the method according to the first aspect of the present invention the virtual topology produced by each server layer network domains is advertised to all client layer network domains.

A distinct virtual topology can be advertised by said server layer network domain to each of the served client layer network domains.

In a further possible embodiment of the method according to the first aspect of the present invention a state for each network resource in a given server layer network domain that lies on the path computed by a path computation tool for each advertised virtual link of said server layer network domain is generated and maintained internally within the server layer network domain.

In a further possible embodiment of the method according to the first aspect of the present invention the virtual nodes and virtual links of said virtual topology advertise the same set of attributes as the nodes and the links of said client layer network domains, as well as access and inter-domain links.

In a further possible embodiment of the method according to the present invention each virtual node and each virtual link of said virtual topology is named using the same naming space as used for the nodes and the links of said client layer network domains, as well as access and inter-domain links.

In a still further possible embodiment of the method according to the first aspect of the present invention the connectivity requirements across each said server layer network domain are set according to a predetermined client layer network domain policies.

In a still further possible embodiment of the method according to the first aspect of the present invention the virtual node and link attributes of virtual nodes and virtual links include among other data fate sharing information of the nodes and links.

In a still further possible embodiment of the method according to the first aspect of the present invention the virtual topology of each said server layer network domain is configured manually or provided by a configuration automation tool of said server layer network domain.

According to a further aspect of the present invention an apparatus adapted to provision a transport service in a multi-domain multi-layer network is provided.

According to a possible embodiment of the apparatus according to the second aspect of the present invention the apparatus is adapted to provision a transport service in a multi-domain multi-layer network comprising at least one client layer network domain and at least one server layer network domain, said apparatus comprising:
means for providing a virtual topology of each said server layer network domain depending on connectivity requirements set for a connectivity across said server layer network domains by each of the served client layer network domains as at least one segment of said client layer network domain topology;
means for determining an end-to-end path between two client layer network nodes across one or more server layer network domains based on an overlay network topology comprising the virtual topologies provided by each said server layer network domain, access links connecting client network nodes of said client layer network domains to said server layer network domains and inter-domain links interconnecting said server layer network domains in the client layer; andmeans for provisioning a transport service via the determined path.

In the following, possible embodiments of different aspects of the present invention are described with reference to the enclosed figures in more detail.
Fig. 1 shows a flow chart of a possible embodiment of a method for provisioning a transport service in a multi-domain multi-layer network according to the first aspect of the present invention;
Fig. 2 shows an example of a multi-domain multi-layer network for illustrating the operation of the method for provisioning a transport service in a multi-domain multi-layer network according to the first aspect of the present invention;
Fig. 3 shows a further example of a multi-domain multi-layer network which illustrates the operation of a network for provisioning a transport service in a multi-domain multi-layer network according to an aspect of the present invention.

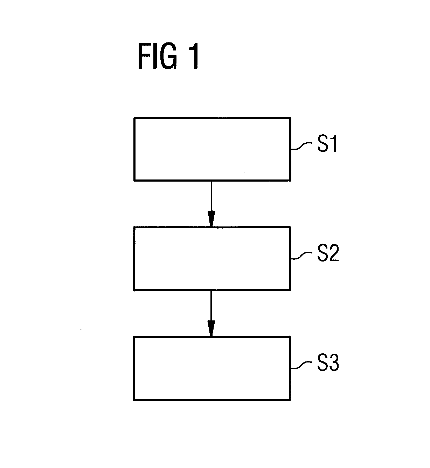

As shown in Fig. 1 a method for provisioning a transport service in a multi-domain multi-layer network comprising at least one client layer network domain and at least one server layer network domain is described in the shown embodiment several steps. In a first step S1 a virtual topology of each server layer network domain is provided depending on connectivity requirements set for a connectivity across said server layer network domains as at least one segment of said client layer network domain topology.

In a further step S2 an end-to-end path between a pair of client network nodes across at least one said server layer network domain is determined based on an overlay network topology comprising the virtual topologies provided by each said server layer network domain, access links connecting client network nodes of said client layer network domains to said server layer network domains and inter-domain links interconnecting said server layer network domains in the client layer.

In a further step S3 a transport service is provisioned via the determined path.

With the method according to the present invention a separation is provided between how a server layer network domain self-discovers its resources and views itself internally from the way the server layer network domain presents itself to client layer network domains of the multi-domain multi-layer network. With the method according to the present invention, the server layer network domains are presented to the client layer network domains as virtual segments of the client layer network domain topology.

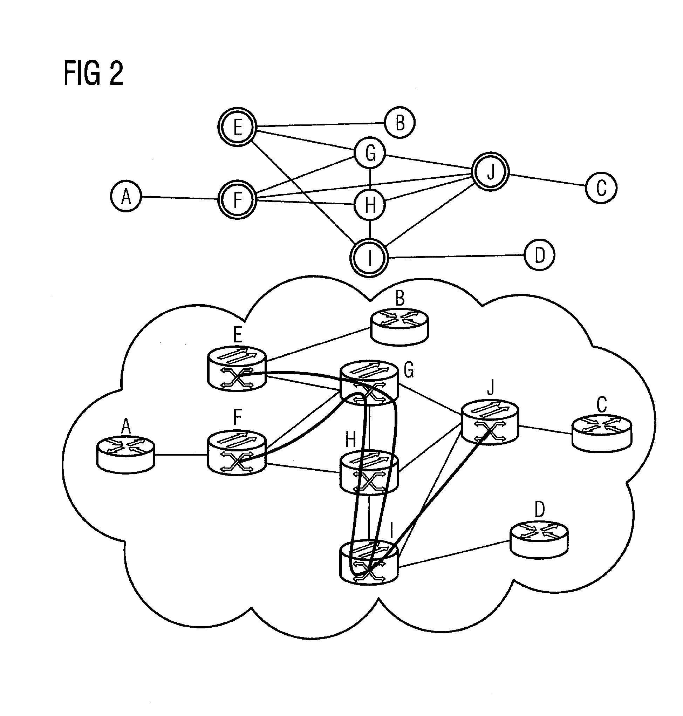

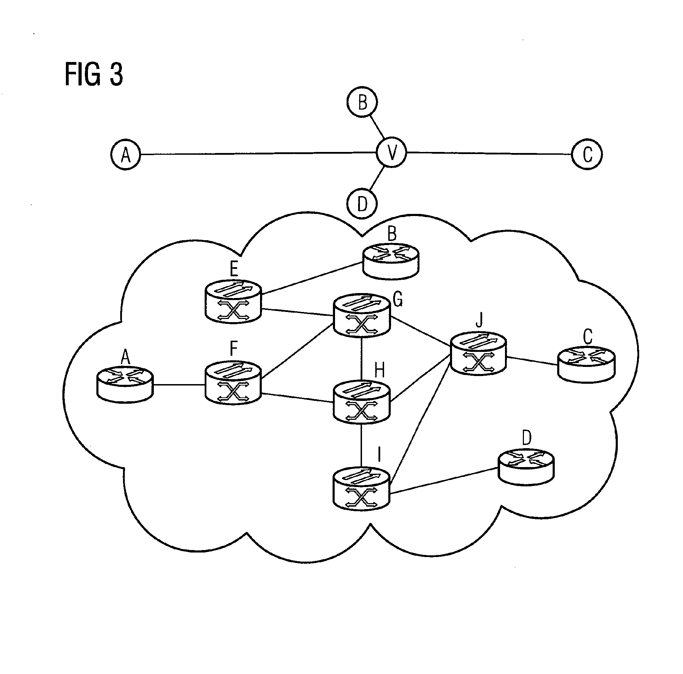

In a simple case, a server layer network domain such as a WDM layer network domain can be presented to the client layer network domains as a set of virtual links as illustrated in the example of Fig. 2 or even as a single virtual node as illustrated in the example of Fig. 3. In a general case, a server layer network domain is presented to all client layer network domains as an arbitrary collection of virtual nodes interconnected via virtual links. Each of these virtual topologies can be used to determine feasible paths across the server layer network domain that satisfy the client layer network domain policies such as mutual diversity of the paths.

For example, a two-domain multi-layer network as illustrated in the example of Fig. 2 there can be a server layer (e.g. WDM) domain and a client layer (e.g. IP/MPLS) domain. Fig. 2 shows above an overlay network topology (made of virtual topology in a form of a two virtual links connected via access links to the client layer nodes) and below a physical topology of the multi-domain multi-layer network. In the shown example network nodes A, B, C, D at the periphery of the topology represent client layer network nodes such as IP routers. The nodes of the network E, F, G, H, I, J represent server layer network nodes such as WDM ROADMs, OTN switches Ethernet switches, etc.

In a still further possible embodiment, there can be more than one server layer network domains providing services to a single client layer network domain or multiple separate client layer network domains.

The nodes A, B , C, D belong in the given example of Fig. 2 to a single client layer network domain, while the nodes E, F, G, H, I and J belong to a single server layer network domain. In the virtual topology shown above the entire server layer network domain is presented to the client layer network domain as a set of two virtual links, EI and FJ, each of which is associated with a potential path across the server layer network domain E-G-H-I and F-G-H-I-J, respectively. In Fig. 3 the same server layer network domain is virtualized as a single (client layer) virtual node V as shown above. In the example of Fig. 2 a client wishes a connectivity between client network nodes A and D as well as between client network nodes B and D. This means that the server layer network domains thus provides a connectivity between these two pairs of client network nodes but not for example between client network nodes A, B. Furthermore, the client may require that the paths between nodes A and C should be diverse from the path between nodes B and D. Alternatively, the client may indicate that he/she does not care whether these two paths are diverse or not. In the first case, the client's requested transport services between nodes A and C have to be diverse from the transport service connecting nodes B and D. The method according to the present invention provides a virtual link topology. In a scenario where it is not important that the requested transport services are diverse, a virtual node style virtual topology is sufficient. A client path computation engine can perform a calculation running for example the Constrained Shortest Path First (CSPF) algorithm on the overlay network topology that is made available to the client path computation engine, for example, by a routing protocol instance such as OSPF-TE common to the client and server layer network domains.

In a possible embodiment of the method according to the present invention, the server layer network domain could be presented as arbitrary mesh of virtual nodes interconnected via virtual links each of which associated with a computed feasible path across the server layer network domain. In a possible embodiment of the method according to the present invention, the virtual topology of each said server layer network domain is advertised to all or some client layer network domains. Advertising can be achieved via a routing protocol instance such as OSPF-TE, common to the client and server layer network domains.

In a possible embodiment of the method according to the present invention, a state is generated for each network resource in a server layer network domain that lies on the path that supports each virtual link computed by a path computation tool of the server layer network domain. The state is associated with and maintained by the server layer domain links that belong to the paths supporting virtual TE links.

Virtual nodes and virtual links as illustrated for example in Figs. 2, 3 of the virtual topology advertise the same set of attributes as the client layer network nodes and links, as well as access and inter-domain links

Each virtual node and each virtual link of the virtual topology is named in a possible embodiment of the method by using the same naming space as used for the client layer network domain nodes and links as well as access and inter-domain links. This naming space can be a set of IP addresses which link and node IDs are allocated from.

In a possible embodiment of the method according to the present invention the connectivity requirements are set in step S1 according to a predetermined client layer network domain policy. The virtual links and virtual nodes of the virtual topology exhibit in a possible embodiment the same set of attributes as the client layer network domain nodes and links as well as access and inter-domain links. The attributes contain, for instance, fate sharing information of nodes and links.

In a possible embodiment of the method according to the present invention the virtual topology of each server layer network domain such as a WDM layer network domain can be configured manually by a server layer network domain operator. Further, it is possible that the virtual topology of the server layer network domain is configured by a configuration automation tool of the server layer network domain.

In a possible embodiment, one example of client layer network domain of multi-domain multi-layer network is an IP/MPLS network domain made of IP/MPLS routers. One example of server layer network domain is WDM layer network domain having WDM reconfigurable optical add/drop multiplexers, ROADM, as network nodes such as nodes F, G, I, J illustrated in the examples of Figs. 2, 3.

According to a further aspect of the present invention, an apparatus is provided which is adapted to provision a transport service in a multi-domain multi-layer network comprising at least one client layer network domain and at least one server layer network domain. The apparatus according to the second aspect of the present invention comprises in a possible embodiment a unit {IB: what is unit ?] for providing virtual topologies of said server layer network domains depending on connectivity requirements set for a connectivity across each said server network domains as at least one segment of the client layer network domain topology.

The apparatus can further comprise a unit for determining an end-to-end path between two client networks nodes across one or more server layer network domains based on an overlay network topology comprising the virtual topologies provided by said server layer network domains, access links connecting client network nodes of the client layer network domain to the server layer network domains and inter-domain links interconnecting said server layer network domains in the client layer. Further, the apparatus can comprise a unit for provisioning a transport service via the determined path.

The method according to the first aspect of the present invention as shown in the embodiment of Fig. 1 can be implemented by a computer program executed by a calculation unit such as a microprocessor. This program can be stored in a program memory of a device within the multi-layer network. This calculation unit can be installed in a separate dedicated device of a multi-domain multi-layer network or integrated in at least one node of the network. In a possible embodiment the apparatus can comprise at least one processor for performing the steps of the method according to the first aspect of the present invention, for example by executing a computer program compris-ing instructions to perform a method comprising the steps S1, S2, S3 as illustrated in Fig. 1. The apparatus according to the second aspect of the present invention can comprise a user interface for a user and/or a network service provider.

A virtual topology of a server layer network domain is provided by the method and apparatus according to the present invention depending on connectivity requirements set for a connectivity across the server layer network domain as at least one segment of the client layer network domain topology. The connectivity requirements can be generated or provided based on client layer network planning. The multi-domain multi-layer network according to a further aspect of the present invention comprises at least one client layer network domain and at least one server layer network domain, wherein the server layer network domains are adapted to provision a transport service requested by a client layer network domain. Moreover, the multi-domain multi-layer network according to the third aspect of the present invention comprises at least one apparatus according to the second aspect of the present invention, wherein said apparatus comprises means for providing a virtual topology of the server layer network domain depending on connectivity requirements set for a connectivity across the server layer network domain as at least one segment of the client layer network domain topology, means for determining an end-to-end path connecting two client nodes across one or more server layer network domains based on an overlay topology comprising the virtual topologies provided by each of the server layer network domains, access links connecting client network nodes of the client network layer domains to the server layer network domains and inter-domain links interconnecting the server layer network domains in the client layer;, and means for provisioning a transport service via the determined path.

In the multi-domain multi-layer network according to the present invention, a server layer network domain such as a WDM layer network domain is presented to the client layer network domains as an arbitrary virtual topology made of virtual nodes interconnected via virtual links. If the server layer network domain serves more than one client layer network domains, it presents, generally speaking, different virtual topology to each of said client layer network domains. It is also possible that the server layer network domain presents identical virtual topology to each client layer network domain it serves. The virtual topology of the properly virtualized server layer network domain complies with the following principles.

Every virtual node and link of the virtual topology exists in the layer network of the client layer network domain and is named from the same naming space as the client node and links . Accordingly, this naming space can be independent or the same one that is used for addressing server layer network domain nodes and links. For example, the virtual links shown in Fig. 2 above and the virtual node shown in the example of the Fig. 3 belong to a client (rather than server)layer network and are named from the same naming space as the client layer network nodes/links rather than the server layer network nodes/links.

Every virtual node and link of the virtual topology advertise in a possible embodiment the same standardized set of attributes as any of the client layer network's own node or link. For example, the virtual links EI and FJ illustrated in Fig. 2 advertise the same set of attributes as the links of the client layer network domain such as the links AF or EB. Likewise, the virtual node V of the virtual topology illustrated in Fig. 3 has the same set of attributes as any of client layer domain nodes, i.e. nodes A, B, C or D.

Accordingly, virtual node and link presentations of the virtual topology have complete sets of attributes which are sufficient for the client layer network domain path computer to calculate paths according to the client policies. In particular, the presentation can contain node/link fate sharing information data so that diverse path computations are possible. For example, the server layer network domain paths selected for the virtual links EI and FJ illustrated in the example of Fig. 2 can go through the same server layer network domain links GH and HI. Therefore, they do share the same fate in a sense that, if either of these links or node H itself go for some reason out of service, this would simultaneously make the two virtual links unusable. This is an important information and can be presented for each of the virtual links as a list of shared risk link group, SRLGs, exactly in the same manner as the fate sharing information is presented for client layer network domain links.

If a client layer network domain path computer selects a path made of a certain chain of virtual nodes and links of the virtual topology, such a path has a high probability of being successfully provisioned if specified in the transport service setup/modification request. A consequence of this principle is that each virtual node or link presentation in the virtual topology is endorsed by a thorough server layer network domain internal path computation that takes into consideration all aspects of the server layer network technology such as WDM layer network technology including, for example, optical impairment considerations. For instance, paths for the virtual links EI and FJ illustrated in the example of Fig. 2 can be computed by the server layer network domain internal path computer with an appropriate state being created for each server layer network resource that lies on the paths.

Accordingly, the method according to the first aspect of the present invention provides accuracy and reliability.

The presented virtual topology is modified in a possible embodiment only via explicit reconfigurations in the server layer network domain such as a WDM layer network domain. The virtual topology is not modified dynamically because of transport service setup or modification or release. Specifically, the setup of a new transport service causes only the re-advertisement of reduced available bandwidth on the virtual links taken by the service; however, all other attributes of the virtual links as well as presentations of all other virtual nodes and links, e.g. node/link fate sharing attributes, remain unchanged. For example, if a new transport service takes path A-F-J-C in the example of Fig. 2, the service setup will only cause a change in the available bandwidth attribute for virtual link FJ and the access links AF and JC. It is guaranteed that the service will take the server layer network domain path F-H-I-J that was pre-computed for the virtual link FJ rather than any other path such as F-H-J. This ensures that the virtual link fate sharing information remains unmodified. Accordingly, the method according to the first aspect of the present invention provides stability of the presented virtual topology and ability for the client to carry out pre-planning before setting up the transport services.

Any change in a server layer network domain such as a WDM layer network domain is reflected in timely representations of the virtual nodes and links. Changes in the server layer network domain can comprise for instance a fiber cut, a device failure, a server layer node de-provisioning, a link de-provisioning, etc. For example, if a fiber cut on a server layer network domain link FG is detected in the example shown in Fig. 2, the virtual link FJ is either immediately withdrawn or represented with zero available bandwidth, so that the client layer network domain path computer will stop considering this virtual link in any future path computations for new or existing transport services. Accordingly, the method according to the first aspect of the present invention shows responsiveness to network changes in a multi-domain multi-layer network.

The virtual topology represents a simplification of the real server layer network domain topology with a significantly fewer number of virtual nodes and links compared to the number of real physical server layer nodes and links. Managing of the virtual topology does not require a significant overhead in terms of manual configuration effort and/or path computation capacity. All the necessary automation is provided by server layer network domain internal Traffic Engineering applications. For example, the entire server layer network domain in the example illustrated in Fig. 2 is presented as a set of two virtual links. The links can be configured in a possible embodiment manually. In an alternative embodiment the links can be configured via a server layer network domain configuration automation tool.

There are different embodiments and different ways to present a virtual server layer network domain topology to the client layer network domains. In a possible embodiment the virtual server network layer domain topology is advertised via a common inter-domain instance of IGP-TE such as OSPF-TE. In an alternative embodiment, the virtual node and link presentations of the virtual topology can be directly published onto the client layer network domain path computation entities. With the method and apparatus according to the present invention, regardless of characteristics of any given client layer network domain, the client views the virtualized server layer network domains as segments of its own network topology comprising the same layer, same set of simple standard link and node properties indistinguishable from those advertised by the nodes and links of the client layer network domain. This means that the client layer network domain path computer is able with the method according to the present invention to compute an end-to-end path across one or more server layer network domains by using its existing own TE tool, and consequently it can influence as to how the requested transport services are placed and optimized across the server layer network domains. For example, by using the virtualized topology illustrated in the example of Fig. 2, the client layer network domain path computer is able to compute an end-to-end path across the server layer network domain, , connecting client node A to client node C. Importantly, the client layer network domain path computer can do this without diving into the complexities of server layer network domain technologies, in particular the complexities of WDM layer technologies such as transponders, reconfigurable optical add/drop multiplexers, ROADM, amplifiers, regenerators or wavelength converters. In the context of a server layer network domain virtualization, these complex technical interrelations are taken care of by the internal server layer network domain traffic engineering. It is of note that a virtual link is never presented to the client network layer domains unless it is supported by a successfully computed path being feasible in all respects.

For a client layer network domain NMS, the server layer network domain, such as a WDM layer network domain, virtualization facilitates complex management applications, such as simultaneous placement of multiple or even all transport services with a global optimization criteria in mind; global mesh re-optimization; global bandwidth fragmentation clean up and others. These applications are difficult, if not impossible, to implement when dealing directly with conventional real server layer topologies, especially in a conventional multi-domain/multi-vendor environment. In contrast, such applications can be applied when working on simplified virtualized topologies presented by each of the server layer network domains.

The concept of server layer network domain virtualization provided by the method and apparatus according to the present invention allows for example server layer networks such as WDM layer networks to participate in upcoming new technologies such as SDN/OpenFlow, which currently target layer 3 and layer 2 networks. Because virtualized server layer network domains, such as WDM layer network domains, can be presented as layer 3 or layer 2 networks (or even as single layer 3 or layer 2 virtual nodes), virtual nodes of such presentations can be viewed as normal layer 3 and/or layer 2 switches, and thus can be controlled by OpenFlow.

With the method and apparatus according to the present invention a server layer network domain virtualization is provided, which creates a simplification that allows for being managed by existing NMS, control plane applications, e.g. GMPLS, and/or by OpenFlow.

## Claims

1. A method for provisioning a transport service in a multi-domain multi-layer network comprising at least one client layer network domain and at least one server layer network domain,
said method comprising the steps of:
(a) providing (S1) a virtual topology of each of said server layer network domains depending on connectivity requirements set for a connectivity across said server layer network domains set by each served client layer network domain as at least one segment of said client layer network domain topology;
(b) determining (S2) an end-to-end path between two client nodes across one or more server layer network domains based on an overlay topology comprising the virtual topologies presented by each of said server layer network domains, access links connecting client network nodes of said client layer network domains to said server layer network domain and inter-domain links interconnecting said server layer network domains in the client layer; and
(c) provisioning (S3) a transport service via the determined path.

2. The method according to claim 1 wherein said server layer network domain provides transport services to said client layer network domains.

3. The method according to claim 1 wherein the end-to-end path between two client nodes across one or more said server layer network domains is computed by a traffic engineering tool/path computer of the client layer network domain based on said overlay network topology.

4. The method according to claim 1 wherein said virtual topology of a given server layer network domain comprises virtual nodes interconnected via virtual links each of which associated with a computed feasible path across said server layer network domain.

5. The method according to claim 1 wherein the virtual topology of each of said server layer network domains is advertised to the client layer network domains.

6. The method according to claim 5 wherein a state for each network resource in the server layer network domain that lies on a path computed by a path computation tool of said server layer network domain to support a given virtual link is generated and maintained.

7. The method according to claim 4 wherein the virtual nodes and virtual links of said virtual topology exhibit the same set of attributes as the client layer network domain nodes and links, as well as access and inter-domain links

8. The method according to claim 4 wherein each virtual node and each virtual link of said virtual topology is named using the same naming space as used for client network nodes and client network links of said client layer network domain as well as access and inter-domain links.

9. The method according to claim 1 wherein said connectivity requirements are set according to a predetermined client layer network domain policy.

10. The method according to claim 7 wherein the virtual node and link attributes include among other information fate sharing information of the nodes and links.

11. The method according to claim 1 wherein the virtual topology of a given server layer network domain is configured manually or provided by a configuration automation tool of said server layer network domain.

12. An apparatus adapted to provision a transport service in a multi-domain multi-layer network comprising at least one client network layer domain and at least one server layer network domain,
said apparatus comprising:
means for providing a virtual topology of each of said server layer network domains depending on connectivity requirements set for a connectivity across said server layer network domains by each of the served client layer network domains as at least one segment of said client network layer domain topology;
means for determining an end-to-end path between two client network nodes across one or more server layer network domains based on an overlay topology comprising the virtual topologies provided by each of said server layer network domains, access links connecting client network nodes of said client layer network domains to said server layer network domain and inter-domain links interconnecting said server layer network domains in the client layer; and
means for provisioning a transport service via the determined end-to-end path.

13. A multi-domain multi-layer network comprising at least one client layer network domain,
at least one server layer network domain adapted to provision a
transport service for the client layer network domain; and
at least one apparatus according to claim 12.
